# EUROPEAN PATENT SPECIFICATION

(11) **EP 3 566 953 B1**
(45) Date of publication and mention of the grant of the patent: **15.07.2020**
(21) Application number: 18195024.7
(22) Date of filing: 18.09.2018
(51) Int. Cl.: B65B 1/46, B07C 5/22, B07C 5/32, B65B 57/14, B65B 61/28, B65B 65/00, B07C 5/20, G01G 13/00, G01G 13/02, G01G 13/06

(54) **MULTI-ROW WEIGHT SORTING APPARATUS FOR STICK PACKED PRODUCTS**
MEHRREIHIGE GEWICHTSSORTIERANLAGE FÜR STICK-VERPACKTE PRODUKTE
APPAREIL DE TRI DE POIDS À RANGÉES MULTIPLES POUR PRODUITS EMBALLÉS EN BÂTONNETS

(30) Priority: 16.04.2018 KR 20180043851
(43) Date of publication of application: 13.11.2019
(73) Proprietor: Intechkorea Co., Ltd., Incheon 22827 (KR)
(72) Inventor: LEE, Sang Ho, Gangseo-gu, Seoul (KR); CHO, Seoung Jin, Gyeyang-gu, Incheon (KR)
(74) Representative: Romano, Giuseppe

(56) References cited:
- KR-B1- 101 409 184
- KR-B1- 101 507 366
- KR-Y1- 200 464 257
- US-A1- 2007 119 632

## Description

### 1. Field of the invention

The present invention relates to a weight sorting apparatus, and more particularly, to a multi-row weight sorting apparatus for stick packed products that may automatically sort normal products and defective products by feeding stick packed products and checking the weights of the stick packed products at the same time.

### 2. Description of the Prior Art

In general, favorite foods such as coffee or tea, instant foods, or health foods are packed and preserved in a disposable packing container to be conveniently drunk and to be easily carried when the users move.

For example, coffee, sugar, and cream are mixed in a closed pack in the form of powder in the case of a coffee stick and tea leaves, extracted powder, granules, and sugar are mixed in the case of tea, and the coffee or tea sticks are packed in the form of long sticks or pouches to be sold.

The packed products have been sorted to normal products and defective products after the weights of the packed products are measured by the weight sorting apparatus, such as a scale, but productivity decreases as the sorting apparatus is not suitable for mass-production processes.

Due to this, patent document 1 according to the related art discloses a weight sorting apparatus for stick packed products including a frame, a feeding part in which cutters and holders are installed in entry frames installed on the left and right sides of the feeding part, a plurality of feeding pipes installed vertically uprights are formed on the lower side of the entry frame, and a plurality of shooters are curved on the lower sides of the feeding pipes, a plurality of impellers formed on the front sides of the shooters of the feeding part and in which a plurality of partition walls are installed while forming a predetermined angle to form a plurality of reception spaces, a plurality of rotary motors configured to provide a rotational force to the plurality of impellers as rotary shafts are connected to the plurality of impellers, a plurality of load sensors configured to the weights of the products introduced into the reception spaces on the lower sides of the plurality of rotary motors, a controller configured to receive the weights of the products measured by the plurality of load sensors to sort the products; and a sorting conveyor configured to receive a sorting result from the controller to feed the product while being rotated.

Patent document 2 discloses a packaging machine and a weighing machine for manufacturing packaging.

However, according to the related art, the configuration and arrangement of the apparatus are complex, normal products and defective products that have been sorted through measurement of the weights of the products are mixed, productivity and operation efficiency are low because there is no apparatus for automatically separating and retrieving the products, measurement errors increase due to vibration of the motor and an external force so that precise measurement is difficult because a load cell interworks with the motor to discharge the products after checking the weights of the products, and the apparatus cannot be easily maintained and repaired, for example, because foreign substances cannot be cleaned as the impeller cannot be separated.

### [Prior Technical Documents]

### [Patent Documents]

(Patent Document 1) Korean Utility Model No. 20-0464257 (published on January 9, 2013)
(Patent Document 2) U.S. Patent Application Publication No. 2007/119632

### SUMMARY OF THE INVENTION

The present invention has been made in an effort to solve the above-mentioned problems, and provides a multi-row weight sorting apparatus for stick packed products that may minimize a measurement error for precise measurement by alleviating an impact due to dropping of a product for a high precision cell that checks the weight of the product, may be conveniently maintained and repaired, for example, by cleaning foreign substances as the measurement hoppers are detachable, and may smoothly discharge the products by using the push parts while preventing arbitrary discharge of the products by properly adjusting the sizes of the discharge holes according to the lengths of the products.

Further, normal products and defective products may be sorted by feeding the packed products and checking the weights of the products at the same time, productivity and operation efficiency may be increased by automatically separating and retrieving the sorted normal products and defective products, the weights of the products may be independently checked and defective products may be sorted for the respective rows, the products received in the multiple rows may be discharged with one motor, and the intervals of the multiple rows may be minimized, and the products may be efficiently sorted through individual controls.

In accordance with an aspect of the present invention, there is provided a multi-row weight sorting apparatus for stick packed products, including: a body part, to which a plurality of frames are connected; an entry part installed above the body part and having a plurality of entry chutes, in which stick packed products are introduced through upper entry holes and drop to lower discharge holes to be discharged; a measurement part including a plurality of measurement units installed in the body in multiple rows and configured to measure the weights of the stick packed products received in measurement hoppers and a plurality of measurement hoppers formed vertically on the upper sides of the measurement units and configured to receive the stick packed products that dropped from the entry chutes; a driving part formed on one side of the body part and configured to move a movable bundle forwards and rearwards by rotating a screw shaft with a driving force of a driving motor; a guide part formed on an opposite side of the body part and configured to guide movement of a push part; a push part including a movement bar connected to the movable bundle to move forwards and rearwards and disposed to cross the body part transversely and a plurality of push bars connected to the movement bar to be perpendicular to the movement bar and configured to move forwards and rearwards to push and discharge the stick packed products received in the measurement hoppers; a plurality of sorting parts disposed on the front sides of the measurement hoppers to be inclined, respectively, so as to discharge the stick packed products, and configured to operate cylinder units to discharge the stick packed products after changing the direction of the stick packed products so as to sort normal products and defective products; and a controller configured to receive measurement signals from the measurement units to determine normal products and defective products and to individually control the sorting parts according to a determination result, wherein a detection sensor is installed between the entry part and the measurement part to detect a stick packed product that drops onto the measurement part, and the apparatus is designed to be operated so that the stick packed product drops onto the push bar that has been moved to the front side such that an external force is alleviated, and wherein the apparatus is designed to be operated so that the controller pushes the stick packed product by moving the push bar rearwards with the driving part if receiving a detection signal from a detection sensor and moving the push bar forwards with the driving part if receiving a measurement signal.

### BRIEF DESCRIPTION OF THE DRAWINGS

The above and other objects, features and advantages of the present invention will be more apparent from the following detailed description taken in conjunction with the accompanying drawings, in which:
FIGS. 1 and 2 is a perspective view of a multi-row weight sorting apparatus according to an embodiment of the present invention;
FIG. 3 is a front view of a multi-row weight sorting apparatus according to an embodiment of the present invention;

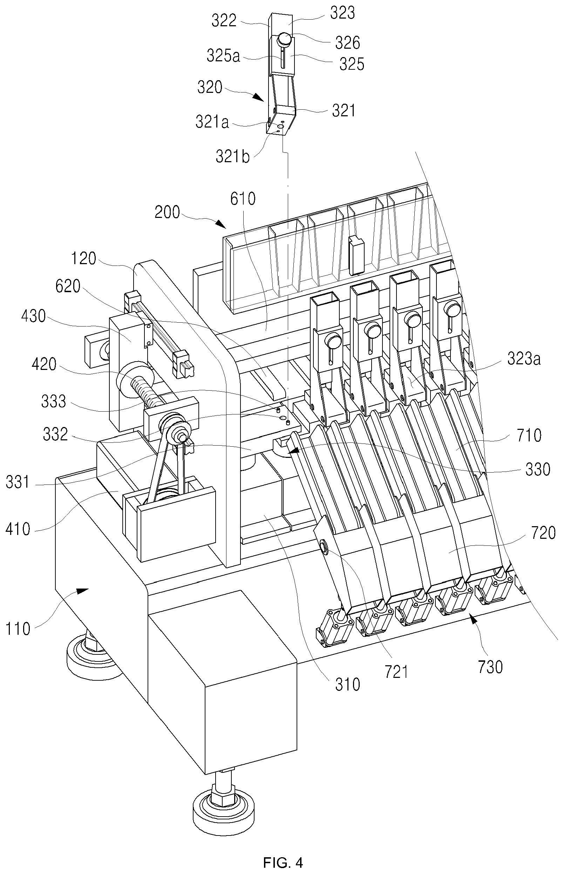

FIG. 4 is a view illustrating a detachable coupling relationship of a measurement hopper according to an embodiment of the present invention;

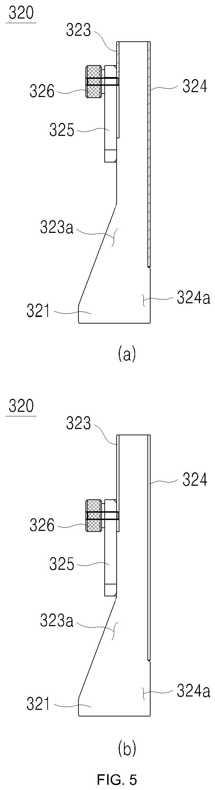

FIG. 5 is a view illustrating a measurement unit according to an embodiment of the present invention; and

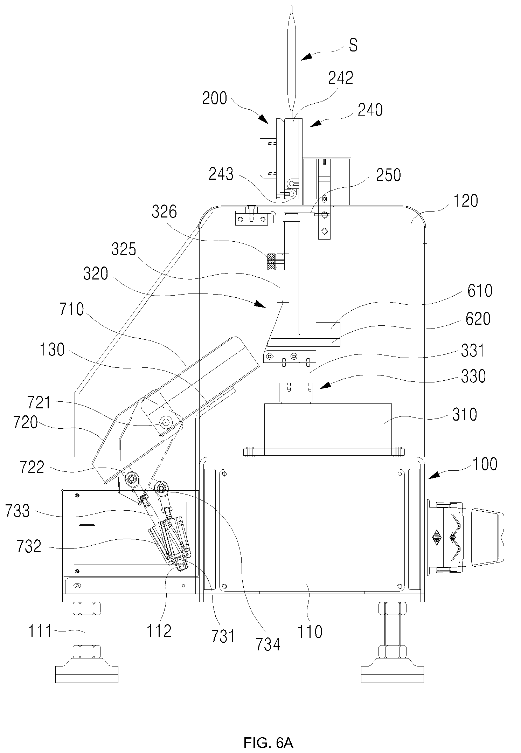

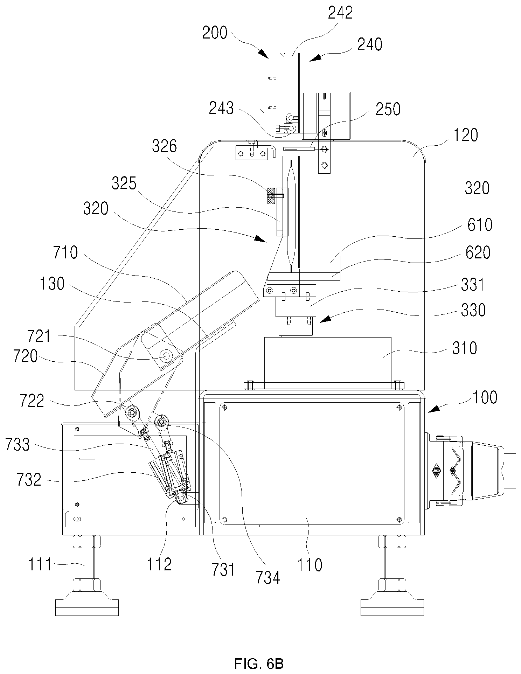

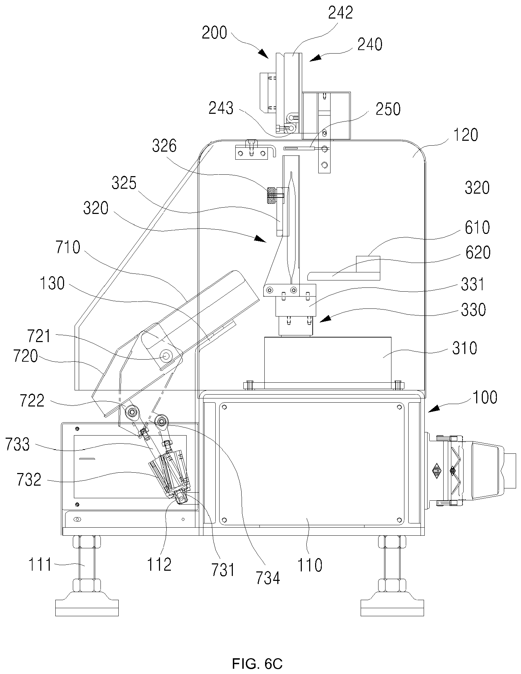

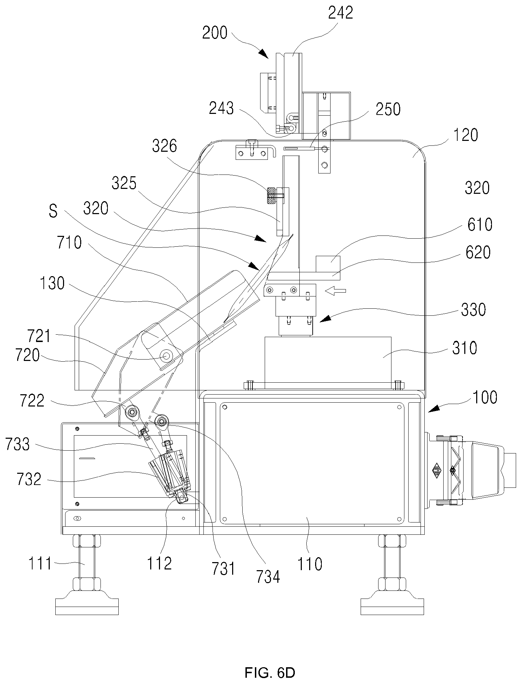

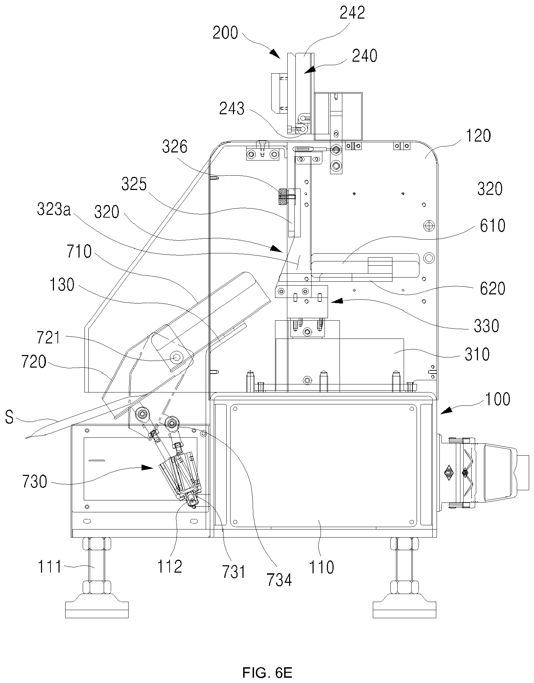

FIGS. 6A to 6E are views sequentially illustrating operations of a multi-row weight sorting apparatus according to an embodiment of the present invention.

### DETAILED DESCRIPTION OF THE EXEMPLARY EMBODIMENTS

Hereinafter, embodiments of detailed contents for carrying out a multi-row weight sorting apparatus for stick packed products according to the present invention will be described in detail with reference to the accompanying drawings.

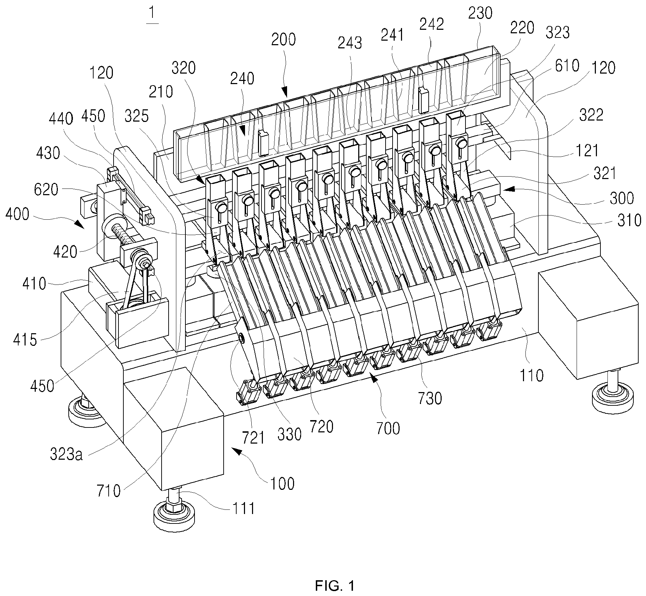

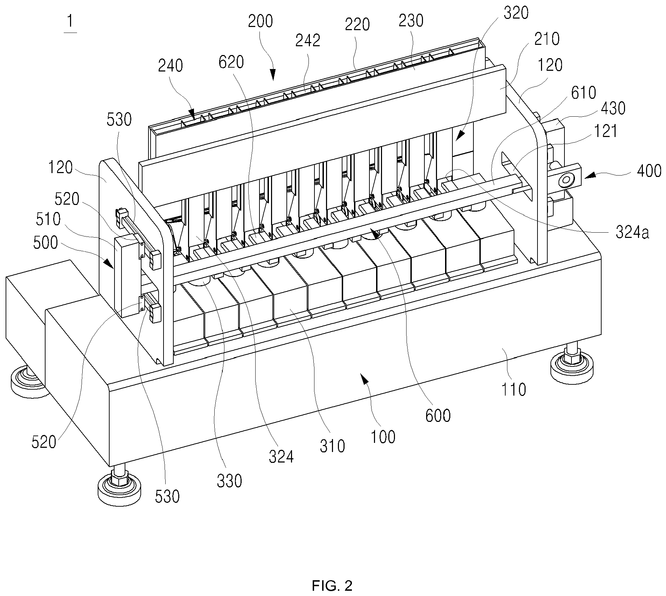

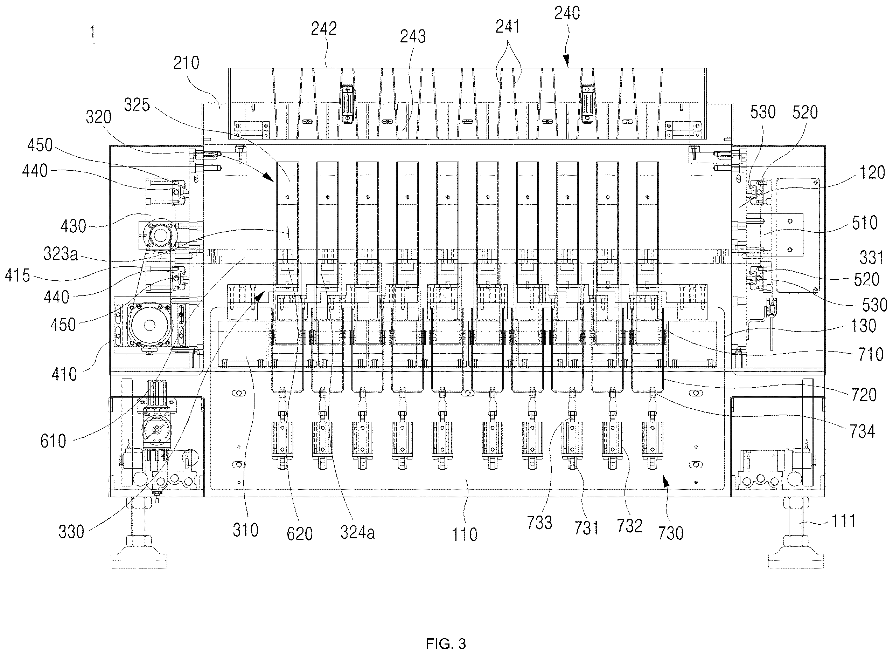

The multi-row weight sorting apparatus for stick packed products according to the present invention is adapted to automatically sort normal products and defective products by feeding stick packed products and checking the weights of the stick packed products at the same time, and referring to FIGS. 1 to 3, includes a body part 100, an entry part 200, a measurement part 300, a driving part 400, a guide part 500, a push part 600, a sorting part 700, and a controller (not illustrated).

The body part 100 is constructed by connecting a plurality of transverse frames and a plurality of longitudinal frames. That is, a main frame 110 is formed at a lower portion of the body part 110, and the main frame 110 is supported on the ground surface by a plurality of supports 111. Side frames 120 are installed uprights on opposite sides of the main frame 100, and movement holes 121 having a slot shape are formed horizontally inside the side frames 120. An inclined frame 130 is connected to a front side of the main frame 100, and an upper side of the inclined frame 130 is inclined downwards.

The entry part 200 crosses an upper portion of the body part 100 transversely to be connected. The opposite side frames 120 may be transversely connected to each other by the support 210, a rear plate 230 may be connected to the support 210, a front plate 220 may be formed on the front side of the rear plate 230, and the front plate 220 may be formed of a transparent material such that the entry of the stick packed products S may be identified from the outside. A plurality of entry chutes having entry spaces are formed between the front plate 220 and the rear plate 230 to be divided in multiple rows. A pair of guide plates 241 are formed on opposite sides of the entry chutes 240 to be spaced apart from each other so as to form an entry space, an entry hole 242 and a discharge hole 243 are formed on the upper side and the lower side of the entry chute 240, respectively, and the stick packed products S are introduced through the entry hole 242 on the upper side and drop through the discharge hole 243 on the lower side. Then, the spacing distance between the pair of guide plates 241 becomes narrower toward the lower side so that the stick packed products S may be easily introduced through the entry hole 242 and may be precisely guided to the measurement hopper 320 through the discharge hole 243.

The measurement part 300 is installed in the body part 100 to frm multiple rows, and receives the stick packed products S that dropped from the entry chutes 240 longitudinally to individually check the weights of the stick packed products. To achieve this, measurement units 310 of the measurement part 300 are disposed on the main frame 110 in multiple rows, and the measurement hoppers 320 are formed vertically on the upper sides of the measurement units 310 so that the stick packed products S that dropped from the entry chutes 240 are temporarily received for measurement of the weights of the stick packed products S. The measurement units 310 are provided with precise measurement sensors to precisely measure the weights of the stick packed products S received in the measurement hoppers 320. Connecting brackets 330 are formed above the measurement units 310 to connect the measurement units 310 and the measurement hoppers 320 for measurement of the weights of the stick packed products S. The connecting brackets 330 may be constructed by connecting a plurality of connecting units 331 in steps. Because the measurement units 310 having a rectangular shape are high-precision load cells and have a large width whereas the measurement hoppers 320 installed above the measurement units 310 have a narrow width to receive the narrow stick packed products S so as not to be inclined severely while the stack packed products S are removed vertically so that the measurement hoppers 320 are biased to the center as compared with the arrangement of the measurement units 310, in this regard, the connecting units 310 constituting the connecting bracket 330 are connected to each other in steps toward the center so that the weights of the stick packed products S received in the measurement hoppers 320 may be measured by the measurement units 310.

The measurement hopper 320 is provided with a reception space, in which the stick packed product S that dropped is temporarily received, in the interior thereof, a base plate 321 is formed at a lower portion of the measurement hopper 320, a magnetic force member 321 a including a magnet or a magnetic substance and a connection recess 321 b are formed at a lower portion of the base plate 321, side plates 322 are installed uprights on opposite sides of the base plate 321 to be connected, a front plate 323 is connected to the front sides of the opposite side plates 322 and the front plate 323 is formed only at upper portions of the front sides of the side plates 322, and a discharge hole 323a, through which the stick packed product S is discharged, is opened on the lower side of the front plate 323. A rear plate 324 is connected to the rear sides of the opposite side plates 322 and the rear plate 324 has an entrance hole 324a at a lower portion thereof so that a push bar 620 appears and disappears in the entrance hole 324a while moving forwards and rearwards.

Further, a movable plate having a U shape is coupled to the front side of the measurement hopper 320, a length adjusting hole 325a having a slot shape is formed vertically on the front surface of the measurement hopper 320, and a fixing bolt 326 is connected to the length adjusting hole 325a so that the measurement hopper 320 is coupled while an end of the fixing bolt 326 is adhered to the front plate 323. Then, the size of the discharge hole 323a is adjusted by moving the movable plate 325 upwards and downwards in a state in which the fixing bolt 32 is released. For example, because the stick packed product S may be made to be easily discharged by the push bar 620 by moving the movable plate 325 upwards and increasing the size of the discharge hole 323a when the length of the stick packed product s is large and the stick packed product S may be prevented from being arbitrarily slid to be discharged b moving the movable plate 325 downwards and decreasing the size of the discharge hole 323a when the length of the stick packed product S is small, the size of the discharge hole 323a may be properly adjusted according to the length of the stick packed product S so that the product may be prevented from being arbitrarily discharged and may be easily discharged b the push part 600.

As described above, because the measurement hopper 320 has a magnetic force member 321a including a magnet or a magnetic substance and a connection recess 321 b at a lower portion of the base plate 321 and a magnetic force member 332 including a magnetic substance or a magnet and a connection boss 333 are formed at an upper portion of the connecting bracket 330 so that the base plate 321 and the connecting bracket 330 may be attached to or detached from each other by using a magnetic force, the boss, and the recess, the apparatus may be conveniently maintained and repaired, for example, foreign substances may be conveniently cleaned, and accordingly, the precision of the measurement of the weights may be increased.

A plurality of detection sensors 250 are installed between the entry part 200 and the measurement part 300 to individually detect the stick packed products that drop from the entry chutes 240 to the measurement hoppers 320 and transmit detection signals to the controller.

The driving part 400 is formed on one side of the body part 100 and is connected to the push part 600 to move the push part 600 connected to a movable bundle 430 forwards and rearwards by rotating a screw shaft 420 with a driving force of the driving motor 410 and moving the push part 600 forwards and rearwards.

To achieve this, the driving motor 410 of the driving part 400 is fixedly installed at an upper portion of one side of the main frame 110, the screw shaft 420 is connected to the upper side of the driving motor 410 while being supported on the side frame 120 on one side by a bracket, and a motor shaft and a screw shaft 420 of the driving motor 410 is connected to a connecting belt 415 through a pulley so that the screw shaft 420 may receive a driving force of the driving motor 410 to be rotated forwards and rearwards.

Further, rail bars 450 are installed in the side frame 120 on one side to be horizontally connected to the upper and lower sides of the screw shaft 420, the movable bundle 430 extending upwards and downwards is coupled to the screw shaft 420 to be moved forwards and rearwards by rotation of the screw shaft 420, movement rails 440 are connected to the upper and lower sides of the movable bundle 430, and the movement rails 440 are coupled to the rail bars 450 to guide movement of the movable bundle 430 stably.

The guide part 500 is formed on an opposite side of the body part 100 and is connected to the push part 600 to assist and guide movement of the push part 600.

To achieve this, auxiliary bars 530 of the guide part 500 are installed on the upper and lower sides of the side frame 120 on the opposite side to be horizontally connected to the upper and lower sides of the side frame 120, the guide bundle 510 extending upwards and downwards and connected to the push part 600 to move forwards and rearwards, auxiliary rails 520 are connected to an upper portion of the guide bundle 510, and the auxiliary rails 520 are coupled to the auxiliary bars 530 so that movement of the guide bundle 510 connected to the push part 600 is stably assisted as the movable bundle 430 moves.

Opposite ends of the movement bar 610 of the push bar 600 are connected between the movable bundle 430 and the guide bundle 510 to be disposed transversely, the push part 600 is moved forwards and rearwards together with the movable bundle 430 and the guide bundle 510 by a range of the movement hole 121 with a driving force of the driving motor 410, and a plurality of push bars 620 are installed in the movement bar 610 at an interval in multiple rows to extend forwards so as to be perpendicular to the movement bar 610 and move forwards and rearwards together with the movement bar 610 so that the stick packed products S received in the measurement hoppers 320 are pushed by the push bars 620 as the push bars 620 appear and disappear in the measurement hoppers 320 through the entrance holes 324a. The number of the push bars 620 is the same as the number of the measurement hoppers 320. Further, because the push bars 620 are introduced into the measurement hoppers 320 before the stick packed products S drop and an external force is absorbed when the stick packed products S drop from the entry chutes 240 onto the push bars 620 in this state, an impact to the measurement unit 310 including a high precision cell due to drop of a product may be alleviated so that measurement error may be minimized and precise measurement is allowed.

The sorting parts 700 are disposed on the front sides of the measurement hoppers 320 to be inclined downwards such that normal products are discharged and defective products are discharged after the directions of the defective products are changed by operating cylinder units 730 so that the normal products and the defective products are sorted.

To achieve this, discharge chutes 710 of the sorting parts 700 are coupled to the downwardly inclined upper sides of the inclined frames 130 on the front sides of the body parts 100 to be inclined downwards, and the discharge chutes 710 are substantially U-shaped and are installed to be adjacent to the front sides of the measurement hopers 320 to receive the stick packed products S pushed by the push bars 620 so as to naturally discharge the stick packed products S through the inclined discharge passages. Further, sorting chutes 720 are connected to ends of the discharge chutes 710 to be rotatable through hinges to sort normal products and defective products, and the cylinder units 730 are coupled to the lower sides of the sorting chutes 720 to be installed in multiple rows to individually elevate and rotate the sorting chutes 720.

Then, a cylinder 732 is disposed in the cylinder unit 730 substantially vertically and a lower connection piece 731 is formed at a lower portion of the cylinder 732 to be connected to a connection ring 110 of the main frame 110 to be rotatable, and a cylinder rod 733 is inserted into the cylinder 732 to appear and disappear and an upper connection piece 734 is formed at an upper portion of the cylinder rod 733 to be connected to a connection ring 722 of the sorting chute 720 to be rotatable.

The controller is installed in the body part 100 or is separately installed to be spaced apart from the body part 100 to control movement of the push part 600 by individually receiving a detection signal for the stick packed product that drops from the entry chute 240 to the measurement hopper 320 from the detection sensor 250 and driving the driving part 400, and receives a measurement signal from the measurement unit 310 to individually determine a normal product and a detective product, and individually controls elevation of the cylinder unit 730 of the sorting part 700 to sort and separate a normal product and a detective product according to the determination result.

Hereinafter, an operation of implementing the multi-row weight sorting apparatus 1 for stick packed products according to the present invention will be described in detail with reference to the accompanying drawings.

The stick packed product S that has been completely packed by a packing machine is introduced into the entry hole 242 of the entry chute 240 and is discharged to the discharge hole 243 to drop downwards, and then the detection sensor 250 detects the stick packed product S and transmits a detection signal to the controller. Before the stick packed product S is received in the measurement hopper 320, the push bar 620 is introduced and inserted into the measurement hopper 320, and the stick packed product S drops onto the push bar 620 so that an external force is alleviated. Thereafter, because the controller receives the detection signal of the detection sensor 250, it immediately reversely rotates the driving motor 410 of the driving part 400 to extract the push bar 620 to the outside of the measurement hopper 320 by moving the push bar 620 rearwards, and the stick packed product S is temporarily received in the measurement hopper 320.

Next, the measurement unit 310 measures the weight of the stick packed product S received in the measurement hopper 320 and transmits a measurement signal to the controller, and the controller determines a normal product and a detective product by comparing the measurement valve of the measurement signal with a range of a predetermined reference value. That is, the stick packed product is determined to be a normal product if the measurement valve corresponds to a value between a lower limit and an upper limit of the reference value and is determined to be a defective product if the measurement value deviates from the upper limit or the lower limit, and then the weight of a packing container of the stick packed product may be excluded.

If the weight of the stick packed product S is completely measured, the controller rotates the driving motor 410 of the driving part 400 forwards, moves the push bar 620 forwards, introduces the push bar 620 into the measurement hopper 320, pushes a lower portion of the stick packed product S received in the measurement hopper 320, and delivers the stick packed product S to the discharge chute 710.

Then, when the stick packed product S is determined to be a normal product according to the individual determination result of the row by the controller, the discharge chute 710 and the sorting chute 720 are maintained on a straight line without operating the cylinder unit 730 disposed in the row, through which the normal product passes, such that the normal product is discharged as it is, and the discharged normal product is normally fed by a feeding unit, such as a conveyor belt installed on the front side. Meanwhile, when the stick packed product S is determined to be a defective product by the controller, the controller operates the cylinder unit 730 disposed in the row, through which the defective product passes, by sending an operation signal to rotate the sorting chute 720 downwards and allow the defective product to drop downwards, and the defective product that dropped is retrieved through a retrieval box or the like. Further, the controller raises the lowered cylinder unit 730 to return the cylinder unit 730 to the original position to allow the cylinder unit 730 to prepare for sorting of the stick packed product S, which will be discharged next. Accordingly, productivity and operation efficiency are remarkably increased by automatically separating and retrieving the sorted normal products and defective products.

As a result, the multi-row weight sorting apparatus 1 for stick packed products according to the present invention may minimize a measurement error and allow precise measurement by alleviating an impact due to dropping of a product for a high precision cell that checks the weight of the product, may conveniently maintained and repaired, for example, by cleaning foreign substances as the measurement hoppers are detachable, may smoothly discharge products while preventing arbitrary discharge of the products by properly adjusting the sizes of the discharge holes according to the lengths of the products, may sort normal products and defective products by feeding the packed products and checking the weights of the products at the same time, may increase productivity and operation efficiency by automatically separating and retrieving the sorted normal products and defective products, may independently check the weights of the products and sort defective products for the respective rows, may discharge the products received in the multiple rows with one motor, and may minimize the intervals of the multiple rows, and may efficiently sort the products through individual controls.

According to the present invention, a measurement error may be minimized for precise measurement by alleviating an impact due to dropping of a product for a high precision cell that checks the weight of the product, the apparatus may be conveniently maintained and repaired, for example, by cleaning foreign substances as the measurement hoppers are detachable, and the products may be smoothly discharged by using the push parts while preventing arbitrary discharge of the products by properly adjusting the sizes of the discharge holes according to the lengths of the products.

Further, normal products and defective products may be sorted by feeding the packed products and checking the weights of the products at the same time, productivity and operation efficiency may be increased by automatically separating and retrieving the sorted normal products and defective products, the weights of the products may be independently checked and defective products may be sorted for the respective rows, the products received in the multiple rows may be discharged with one motor, and the intervals of the multiple rows may be minimized, and the products may be efficiently sorted through individual controls.

The implementations of the present invention are examples and the present invention is not limited to the implementations.

## Claims

1. A multi-row weight sorting apparatus for stick packed products, comprising:
a body part (100),
to which a plurality of frames are connected;
an entry part (200) installed above the body part and having a plurality of entry chutes (240), in which stick packed products are introduced through upper entry holes (242) and drop to lower discharge holes (243) to be discharged;
measurement parts (300) including a plurality of measurement units (310) installed in the body in multiple rows and configured to measure the weights of the stick packed products received in measurement hoppers (320) and a plurality of measurement hoppers formed vertically on the upper sides of the measurement units and configured to receive the stick packed products that dropped from the entry chutes;
**characterized by** a driving part (400) formed on one side of the body part and configured to move a movable bundle (430) forwards and rearwards by rotating a screw shaft (420) with a driving force of a driving motor (410);
a guide part (500) formed on an opposite side of the body part and configured to guide movement of a push part;
a push part (600) including a movement bar (610) connected to the movable bundle to move forwards and rearwards and disposed to cross the body part transversely and a plurality of push bars (620) connected to the movement bar to be perpendicular to the movement bar and configured to move forwards and rearwards to push and discharge the stick packed products received in the measurement hoppers;
a plurality of sorting parts (700) disposed on the front sides of the measurement hoppers to be inclined, respectively, so as to discharge the stick packed products, and configured to operate cylinder units (730) to discharge the stick packed products after changing the direction of the stick packed products so as to sort normal products and defective products; and
a controller configured to receive measurement signals from the measurement units to determine normal products and defective products and to individually control the sorting parts according to a determination result,
wherein a detection sensor (250) is installed between the entry part and the measurement part to detect a stick packed product that drops onto the measurement part, and the apparatus is designed to be operated so that the stick packed product drops onto the push bar that has been moved to the front side such that an external force is alleviated, and
wherein the apparatus is designed to be operated so that the controller pushes the stick packed product by moving the push bar rearwards with the driving part if receiving a detection signal from a detection sensor and moving the push bar forwards with the driving part if receiving a measurement signal.

2. The multi-row weight sorting apparatus of claim 1, wherein the entry part includes:
a support (210) connecting side frames (120) installed uprights on opposite sides of the body part;
front and rear plates (220, 230) coupled through the support; and
a plurality of entry chutes (240) formed between the front and rear plates to be divided,
wherein each of the entry chutes has an entry hole (242) and a discharge hole (243) that are open, a pair of guide plates (241) are formed on opposite sides of the entry chute to be spaced apart from each other, and a spacing distance between the pair of guide plates becomes narrower towards the lower side.

3. The multi-row weight sorting apparatus of claim 1, wherein the driving part includes:
a driving motor (410) formed on one side of the body part;
a screw shaft (420) connected to a motor shaft of the driving motor by a connecting belt (415) and configured to receive a driving force to rotate forwards and rearwards;
rail bars (450) installed on upper and lower sides of the screw shaft of the side frame on one side;
a movable bundle (430) coupled to the screw shaft and configured to move forwards and rearwards; and
movement rails (440) connected to upper and lower sides of the movable bundle and coupled to the rail bars to assist movement of the movable bundle,
wherein the guide part includes:
auxiliary bars (530) installed on upper and lower sides of the side frame on an opposite side;
a guide bundle (510) connected to the movable bundle by a movable bar and configured to move forwards and rearwards as the movable bundle moves; and
auxiliary rails (520) connected to upper and lower sides of the guide bundle and coupled to the auxiliary bars to assist movement of the guide bundle.

4. The multi-row weight sorting apparatus of claim 1, wherein each of the sorting parts includes:
a discharge chute (710) coupled to the body part and disposed on the front side of the measurement hopper to be inclined downwards to receive the stick packed product pushed by the push bar from the measurement hopper and discharge the stick packed product;
a sorting chute (720) connected to the discharge chute to be rotatable and configured to sort normal products and defective products; and
a cylinder unit (730) coupled to the sorting chute and individually elevated to rotate the sorting chute.

5. The multi-row weight sorting apparatus of claim 1, wherein the controller maintains the sorting chute in line with the discharge chute when the stick packed product is determined to be a normal product, and lowers the sorting chute such that the stick packed product drops to the lower side when the stick packed product is determined to be a defective product.

## Patentansprüche

1. Mehrbahnige Gewichtssortiervorrichtung für Stick-verpackte Produkte, umfassend:
einen Gehäuseteil (100), an dem eine Vielzahl von Rahmen befestigt sind;
einen Eintrittsteil (200), der über dem Gehäuseteil installiert ist und eine Vielzahl von Eintrittsrutschen (240) aufweist, in welche Stick-verpackte Produkte durch obere Eingangsöffnungen (242) eingeführt werden und zu unteren Entnahmeöffnungen (243) zum Entnehmen fallen;
Messteile (300) mit einer Vielzahl von Messeinheiten (310), die in dem Gehäuse in mehreren Bahnen installiert sind und konfiguriert sind, um die Gewichte der Stick-verpackten Produkte zu messen, wobei diese in Messbehältern (320) aufgenommen werden, wobei eine Vielzahl von Messbehältern vertikal auf den oberen Seiten der Messeinheiten ausgebildet sind und konfiguriert sind, um die Stick-verpackten Produkte aufzunehmen, die von den Eintrittsrutschen gefallen sind;
**gekennzeichnet durch** einen Antriebsteil (400), der auf einer Seite des Gehäuseteils ausgebildet ist und konfiguriert ist, um einen bewegbaren Bund (430) vorwärts und rückwärts durch Drehen einer Schraubenwelle (420) mittels einer Antriebskraft eines Antriebsmotors (410) zu bewegen;
einen Führungsteil (500), der auf einer entgegengesetzten Seite des Gehäuseteils ausgebildet ist und konfiguriert ist, um die Bewegung eines Schiebeteils zu führen;
einen Schiebeteil (600), der einen Bewegungsbalken (610) enthält, der mit dem bewegbaren Bund zum Vorwärts- und Rückwärtsbewegen verbunden ist und angeordnet ist, um den Gehäuseteil transversal zu kreuzen, und eine Vielzahl von Schiebebalken (620), die mit dem Bewegungsbalken so verbunden sind, dass sie senkrecht zu dem Bewegungsbalken sind, wobei sie konfiguriert sind, um sich vorwärts und rückwärts zu bewegen, um die in den Messbehältern aufgenommenen Stick-verpackten Produkte zu schieben und zu entnehmen;
eine Vielzahl von Sortierteilen (700), die auf den Vorderseiten der Messbehälter jeweils schräg angeordnet sind, um so die Stick-verpackten Produkte zu entnehmen, und konfiguriert sind, um Zylindereinheit (730) zu betreiben, um die Stick-verpackten Produkte nach Ändern der Richtung der Stick-verpackten Produkte zu entnehmen, um so normale Produkte und defekte Produkte zu sortieren; und
einen Controller, der konfiguriert ist, um Messsignale von den Messeinheiten zu empfangen, um normale Produkte und defekte Produkte zu bestimmen und um individuell die Sortierteile gemäß einem Bestimmungsergebnis zu steuern,
wobei ein Erfassungssensor (250) zwischen dem Eintrittsteil und dem Messteil installiert ist, um ein Stick-verpacktes Produkt, das auf den Messteil fällt, zu erfassen, wobei die Vorrichtung ausgelegt ist, um so betrieben zu werden, dass das Stick-verpackte Produkt auf den Schiebebalken fällt, der von der Vorderseite so bewegt wurde, dass eine externe Kraft verringert wird, und
wobei die Vorrichtung so ausgelegt ist, dass sie betrieben wird, so dass der Controller das Stick-verpackte Produkt durch Rückwärtsbewegen des Schiebebalkens mit dem Antriebsteil schiebt, wenn er ein Erfassungssignal von einem Erfassungssensor empfängt, wobei der Schiebebalken vorwärts mit dem Antriebsteil bewegt wird, wenn ein Messignal empfangen wird.

2. Mehrbahnige Gewichtssortiervorrichtung nach Anspruch 1, wobei der Eintrittsteil enthält:
einen Träger (210), der Seitenrahmen (120) verbindet, die aufrecht an entgegengesetzten Seiten des Gehäuseteils installiert sind;
Front- und Rückplatten (220, 230), die durch den Träger gekoppelt sind; und
eine Vielzahl von Eintrittsrutschen (240), die zwischen den Front- und Rückplatten zur Teilung ausgebildet sind,
wobei jede der Eintrittsrutschen eine Eintrittsöffnung (242) und eine Entnahmeöffnung (243) enthält, welche offen sind, wobei ein Paar Führungsplatten (241) auf entgegengesetzten Seiten der voneinander zu beabstandenden Eintrittsrutschen ausgebildet sind und wobei ein Abstand zwischen dem Paar von Führungsplatten in Richtung zur niedrigeren Seite geringer wird.

3. Mehrbahnige Gewichtssortiervorrichtung nach Anspruch 1, wobei der Antriebsteil enthält:
einen Antriebsmotor (410), der auf einer Seite des Gehäuseteils ausgebildet ist,
eine Schraubenwelle (420), die mit einer Motorwelle des Antriebsmotors durch einen Verbindungsriemen (415) verbunden ist und konfiguriert ist, um eine Antriebskraft zur Vorwärts- und Rückwärtsdrehung aufzunehmen;
Schienenbalken (450), die an oberen und unteren Seiten der Schraubenwelle des Seitenrahmens auf einer Seite installiert sind;
einen bewegbaren Bund (430), der mit der Schraubenwelle gekoppelt ist und konfiguriert ist, um sich vorwärts und rückwärts zu bewegen; und
Bewegungsschienen (440), die mit oberen und unteren Seiten des bewegbaren Bunds verbunden sind und mit den Schienenbalken gekoppelt sind, um eine Bewegung des bewegbaren Bunds zu unterstützen,
wobei der Führungsteil enthält:
Hilfsbalken (530), die an oberen und unteren Seiten des Seitenrahmens auf einer entgegengesetzten Seite installiert sind;
einen Führungsbund (510), der mit dem bewegbaren Bund durch einen bewegbaren Balken verbunden ist und konfiguriert ist, um sich vorwärts und rückwärts zu bewegen, wie sich der bewegbare Bund bewegt; und
Hilfsschienen (520), die mit oberen und unteren Seiten des Führungsbunds verbunden sind und mit den Hilfsbalken gekoppelt sind, um eine Bewegung des Führungsbunds zu unterstützen.

4. Mehrbahnige Gewichtssortiervorrichtung nach Anspruch 1, wobei jeder der Sortierteile enthält:
eine Entnahmerutsche (710), die mit dem Gehäuseteil gekoppelt ist und an der Vorderseite des Messbehälters nach unten schräg angeordnet ist, um die Stick-verpackten Produkte zu empfangen, die durch den Schiebebalken von dem Messbehälter geschoben werden, um das Stick-verpackte Produkt zu entnehmen;
eine Sortierrutsche (720), die mit der Entnahmerutsche so verbunden ist, dass sie drehbar ist, und konfiguriert um normale Produkte und defekte Produkte zu sortieren; und
eine Zylindereinheit (730), die mit der Sortierrutsche gekoppelt ist und individuell erhöht ist, um die Sortierrutsche zu drehen.

5. Mehrbahnige Gewichtssortiervorrichtung nach Anspruch 1, wobei der Controller die Sortierrutsche mit der Entnahmerutsche ausgerichtet hält, wenn das Stick-verpackte Produkt als ein normales Produkt erfasst wird, und die Sortierrutsche erniedrigt, so dass das Stick-verpackte Produkt zu der unteren Seite fällt, wenn bestimmt wird, dass das Stick-verpackte Produkt ein defektes Produkt ist.

## Revendications

1. Appareil de tri de poids à rangées multiples pour produits emballés en bâtonnets, comprenant :
une partie de corps (100) à laquelle une pluralité de bâtis sont raccordés ;
une partie d'entrée (200) installée au-dessus de la partie de corps et ayant une pluralité de goulottes d'entrée (240), dans laquelle les produits emballés en bâtonnets sont introduits par des trous d'entrée supérieurs (242) et lâchés sur des trous de décharge inférieurs (243) pour être déchargés ;
des parties de mesure (300) comprenant une pluralité d'unités de mesure (310) installées dans le corps sur plusieurs rangées et configurées pour mesurer les poids des produits emballés en bâtonnets reçus dans des trémies de mesure (320) et une pluralité de trémies de mesure formées verticalement sur les côtés supérieurs des unités de mesure et configurées pour recevoir les produits emballés en bâtonnets qui sont tombés des goulottes d'entrée ;
**caractérisé par** une partie d'entraînement (400) formée sur un côté de la partie de corps et configurée pour déplacer un groupe (430) mobile vers l'avant et vers l'arrière en faisant tourner un arbre à vis (420) avec une force d'entraînement d'un moteur d'entraînement (410) ;
une partie de guidage (500) formée sur un côté opposé de la partie de corps et configurée pour guider le mouvement d'une partie de poussée ;
une partie de poussée (600) comprenant une barre de déplacement (610) raccordée au groupe mobile afin de se déplacer vers l'avant et vers l'arrière et disposée pour traverser la partie de corps de manière transversale et une pluralité de barres de poussée (620) raccordées à la barre de déplacement pour être perpendiculaires à la barre de déplacement et configurées pour se déplacer vers l'avant et vers l'arrière afin de pousser et de décharger les produits emballés en bâtonnets reçus dans les trémies de mesure ;
une pluralité de parties de tri (700) disposées sur les côtés avant des trémies de mesure afin d'être inclinées, pour décharger les produits emballés en bâtonnets, et configurées pour actionner les unités de cylindre (730) afin de décharger les produits emballés en bâtonnets après avoir changé la direction des produits emballés en bâtonnets pour trier les produits normaux et les produits défectueux ; et
un organe de commande pour recevoir des signaux de mesure provenant des unités de mesure afin de déterminer les produits normaux et les produits défectueux et pour commander individuellement les parties de tri selon un résultat de détermination,
dans lequel un capteur de détection (250) est installé entre la partie d'entrée et la partie de mesure afin de détecter un produit emballé en bâtonnet qui tombe sur la partie de mesure, et l'appareil est conçu pour être actionné de sorte que le produit emballé en bâtonnet tombe sur la barre de poussée qui a été déplacée vers le côté avant de sorte qu'une force externe est réduite, et
dans lequel l'appareil est conçu pour être actionné de sorte que l'organe de commande pousse le produit emballé en bâtonnet en déplaçant la barre de poussée vers l'arrière avec la partie d'entraînement si l'on reçoit un signal de détection d'un capteur de détection et en déplaçant la barre de poussée vers l'avant avec la partie d'entraînement si l'on reçoit un signal de mesure.

2. Appareil de tri de poids à rangées multiples selon la revendication 1, dans lequel la partie d'entrée comprend :
un support (210) raccordant des montants installés de bâtis latéraux (120) sur les côtés opposés de la partie de corps ;
des plaques avant et arrière (220, 230) couplées par le biais du support ; et
une pluralité de goulottes d'entrée (240) formées entre les plaques avant et arrière pour être divisées,
dans lequel chacune des goulottes d'entrée a un trou d'entrée (242) et un trou de décharge (243) qui sont ouverts, une paire de plaques de guidage (241) sont formées sur les côtés opposés de la goulotte d'entrée pour être espacées l'une de l'autre, et une distance d'espacement entre la paire de plaques de guidage se rétrécit vers le côté inférieur.

3. Appareil de tri de poids à rangées multiples selon la revendication 1, dans lequel la partie d'entraînement comprend :
un moteur d'entraînement (410) formé sur un côté de la partie de corps ;
un arbre à vis (420) raccordé à un arbre de moteur du moteur d'entraînement par une courroie de raccordement (415) et configuré pour recevoir une force d'entraînement pour tourner vers l'avant et vers l'arrière ;
des barres de rail (450) installées sur les côtés supérieur et inférieur de l'arbre à vis du bâti latéral d'un côté ;
un groupe mobile (430) couplé à l'arbre à vis et configuré pour se déplacer vers l'avant et vers l'arrière ; et
des rails de déplacement (440) raccordés aux côtés supérieur et inférieur du groupe mobile et couplés aux barres de rail pour assister le déplacement du groupe mobile,
dans lequel la partie de guidage comprend :
des barres auxiliaires (530) installées sur les côtés supérieur et inférieur du bâti latéral sur un côté opposé ;
un groupe de guidage (510) raccordé au groupe mobile par une barre mobile et configuré pour se déplacer vers l'avant et vers l'arrière lorsque le groupe mobile se déplace ; et
des rails auxiliaires (520) raccordés aux côtés supérieur et inférieur du groupe de guidage et couplés aux barres auxiliaires pour assister le déplacement du groupe de guidage.

4. Appareil de tri de poids à rangées multiples selon la revendication 1, dans lequel chacune des parties de tri comprend :
une goulotte de décharge (710) couplée à la partie de corps et disposée sur le côté avant de la trémie de mesure pour être inclinée vers le bas afin de recevoir le produit emballé en bâtonnet poussé par la barre de poussée à partir de la trémie de mesure et décharger le produit emballé en bâtonnet ;
une goulotte de tri (720) raccordée à la goulotte de décharge pour pourvoir tourner et configurée pour trier les produits normaux et les produits défectueux ; et
une unité de cylindre (730) couplée à la goulotte de tri et individuellement levée pour faire tourner la goulotte de tri.

5. Appareil de tri de poids à rangées multiples selon la revendication 1, dans lequel l'organe de commande maintient la goulotte de tri alignée avec la goulotte de décharge lorsque le produit emballé en bâtonnet est déterminé comme étant un produit normal, et abaisse la goulotte de tri de sorte que le produit emballé en bâtonnet tombe sur le côté inférieur lorsque le produit emballé en bâtonnet est déterminé comme étant un produit défectueux.
